# FASCICULE DE BREVET EUROPEEN

(11) **EP 2 749 496 B1**
(45) Date de publication et mention de la délivrance du brevet: **12.08.2015**
(21) Numéro de dépôt: 13005808.4
(22) Date de dépôt: 13.12.2013
(51) Int. Cl.: B64C 27/04, B64C 27/57, F02C 9/00, B64C 27/12, B64D 31/00, B64D 31/06

(54) **Procédé d'entraînement en rotation d'un rotor de giravion, par anticipation des besoins en couple entre deux consignes de vitesse de rotation du rotor**
Drehantriebsverfahren eines Rotors eines Drehflügelflugzeugs durch Vorwegnahme des Kupplungsbedarfs zwischen zwei Drehgeschwindigkeitseinstellungen des Rotors
Method for rotating a rotorcraft rotor, by anticipating torque requirements between two set speeds of rotation of the rotor

(30) Priorité: 27.12.2012 FR 1203608
(43) Date de publication de la demande: 02.07.2014
(73) Titulaire: Airbus Helicopters, 13725 Marignane Cedex (FR)
(72) Inventeur: Vallart, Jean-Baptiste, F-13006 Marseille (FR); Vieira, Hilario, F-13130 Berre L'Etang (FR)
(74) Mandataire: GPI & Associés

(56) Documents cités:
- US-A- 5 314 147
- US-A1- 2007 118 254
- US-A1- 2008 283 671

## Description

La présente invention est du domaine des giravions équipés d'au moins un rotor à voilure tournante. La présente invention relève plus particulièrement des méthodes de traitement de données, adaptées à une fonction spécifique de détermination d'une consigne transmise à une unité de régulation du fonctionnement d'un groupe de motorisation équipant un giravion, pour l'entraînement dudit au moins un rotor à une vitesse de rotation donnée.

Toujours au regard du domaine dont relève la présente invention, la fonction de détermination de ladite consigne prend plus spécifiquement en compte une anticipation des besoins en puissance que le groupe de motorisation doit fournir pour l'entraînement dudit au moins un rotor à une vitesse de rotation donnée.

Dans le domaine de l'aéronautique, les giravions sont des aéronefs à voilure tournante équipés d'au moins un rotor. Un tel rotor est notamment au moins un rotor principal à axe sensiblement vertical procurant au moins la sustentation du giravion. Dans le cadre d'un hélicoptère, le rotor principal procure non seulement la sustentation du giravion, mais aussi sa propulsion et/ou son guidage en vol en tangage et en roulis.

Les giravions sont aussi équipés d'un dispositif anti-couple. Un tel dispositif anti-couple est par exemple un dispositif à propulsion d'air, ou encore plus couramment est formé d'au moins un rotor annexe à axe sensiblement horizontal procurant un guidage en lacet du giravion. Un tel rotor annexe est par exemple un rotor arrière ou une hélice propulsive dans le cadre d'un giravion à grandes vitesses de translation et à long rayon d'action.

La portance du giravion est procurée par le rotor principal. Il est traditionnel de faire varier la portance du giravion selon une commande de variation du pas collectif des pales composant la voilure tournante du rotor principal. L'entraînement en rotation du rotor principal est considéré comme prioritaire, compte tenu de sa fonction essentielle de sustentation du giravion.

Dans le cas d'un hélicoptère, le guidage du giravion en tangage et en roulis est effectué à partir d'une variation de pas cyclique des pales du rotor principal. Le guidage en lacet du giravion est traditionnellement effectué par la mise en oeuvre du dispositif anti-couple, tel que par une variation du pas collectif du ou des rotors annexes à axe sensiblement horizontal. Le guidage d'un giravion peut aussi être obtenu en tout ou partie par l'intermédiaire de volets basculants ou autres gouvernes mobiles analogues dont est munie une voilure fixe du giravion, tels qu'une ou plusieurs gouvernes horizontales et/ou un ou plusieurs volets de dérive.

Le ou les rotors d'un giravion sont traditionnellement entraînés par un même groupe de motorisation, comprenant un ou plusieurs organes moteurs. Le groupe de motorisation est aussi exploité pour l'entraînement de divers organes et/ou équipements du giravion consommateurs de puissance mécanique.

De tels organes et/ou équipements comprennent par exemple une machine électrique pour alimenter en électricité un réseau de bord électrique du giravion, voire encore une machine électrique réversible procurant sélectivement un apport de puissance mécanique pour l'entraînement du ou des rotors. Par exemple encore, de tels organes et/ou équipements comprennent un ou plusieurs équipements de servitude, tels qu'une installation de ventilation, de chauffage et/ou de climatisation par exemple.

Le ou les organes moteurs du groupe de motorisation sont couramment agencés en turboréacteur, comprenant une turbine libre entraînée en rotation par un générateur de gaz. La turbine libre est en prise sur le ou les rotors à entraîner en rotation, traditionnellement par l'intermédiaire d'au moins une boîte de transmission principale de puissance mécanique interposée entre la turbine libre et le ou les rotors.

Les dits organes et/ou équipements du giravion consommateurs de puissance mécanique, sont aussi couramment entraînés à partir de ladite boîte de transmission principale de puissance.

Le groupe de motorisation est dimensionné en fonction d'une vitesse nominale prédéfinie de rotation dudit au moins un rotor principal. Historiquement, la vitesse d'entraînement en rotation d'un rotor principal a longtemps été établie comme constante, voire marginalement variable dans une plage de vitesses restreinte. Dans ce cadre historique, la portance procurée par le rotor principal est seulement ajustée à partir d'une commande de variation de pas collectif des pales. Les autres éventuels rotors du giravion, voire encore lesdits organes et instruments consommateurs de puissance mécanique équipant le giravion, sont entraînés selon la puissance disponible fournie par le groupe de motorisation.

Les commandes de vol émises par le pilote du giravion sont couplées entre elles, pour mettre en cohérence l'évolution en vol souhaitée du giravion avec la puissance fournie par le groupe de motorisation et répartie entre les différents rotors selon les besoins. Les diverses commandes de variation du pas des pales des différents rotors sont générées par un pilote du giravion émetteur de commandes de vol, tel qu'un pilote humain au moyen d'organes de commande manuelle ou tel qu'un pilote automatique par l'intermédiaire de moyens de calcul.

Le groupe de motorisation est en général équipé d'une unité de régulation de son fonctionnement (telle que par exemple un FADEC, d'après l'acronyme anglais Full Authority Digital Engine Control). L'unité de régulation dispose d'une consigne relative aux besoins en puissance que le groupe de motorisation doit fournir pour l'entraînement du rotor principal à la dite vitesse nominale. Cette consigne est délivrée par une unité de commande équipant le giravion, (telle que par exemple un AFCS d'après l'acronyme anglais Automatic Flight Control System).

Plus particulièrement, l'unité de commande est génératrice d'informations relatives à une requête en puissance à fournir par le groupe de motorisation pour répondre aux besoins globaux en puissance du giravion. Conformément aux besoins en puissance prioritaires du rotor principal, l'unité de commande est génératrice d'une consigne relative aux besoins en puissance du rotor principal entraîné à une vitesse de rotation donnée, selon un état de vol du giravion préalablement identifié. Une telle consigne est calculée par l'unité de commande selon ladite vitesse donnée d'entraînement en rotation du rotor principal pour un état de vol donné du giravion.

Ladite consigne est transmise par l'unité de commande à l'unité de régulation, pour obtenir une régulation du fonctionnement du groupe de motorisation en fonction des besoins immédiats en couple du rotor principal, et par voie de conséquence en fonction des besoins immédiats en couple des autres éventuels rotors équipant le giravion, voire encore en fonction des besoins en puissance d'équipements de servitude du giravion consommateurs d'énergie mécanique.

A cet effet, la consigne est notamment établie en exploitant des commandes de vol opérées par le pilote, à partir desquelles commandes de vol est déduite la puissance nécessaire à fournir par le groupe de motorisation. L'unité de régulation intégrée au groupe de motorisation traite la consigne émise par l'unité de commande, pour doser la quantité de carburant nécessaire au groupe de motorisation pour répondre aux besoins de vitesse d'entraînement du rotor principal à sa vitesse nominale, compte tenu des besoins en puissance identifiés par la consigne.

On pourra par exemple se référer à ce propos au document US3174284 (UNITED AIRCRAFT CORP.) qui décrit des modalités de fonctionnement d'une telle unité de régulation.

Accessoirement tel que divulgué par le document US5314147 (UNITED TECHNOLOGIES CORP.), la consigne est traitée par l'unité de régulation non seulement selon la charge appliquée au(x) rotor(s) définie à partir des commandes de vol émises par le pilote, mais aussi en prenant en compte une situation de vol particulière du giravion, telle qu'une situation de combat dans laquelle un armement équipant le giravion est activé.

Toujours au regard d'une situation particulière à partir de laquelle l'unité de régulation définit la quantité de carburant nécessaire au groupe de motorisation, on pourra se référer au document US4466526 (CHANDLER EVANS INC.), qui décrit des modalités d'injection du carburant en fonction d'une mise en autorotation du rotor principal.

Aussi performantes que puissent être les unités de régulation, il est néanmoins constaté des divergences entre la valeur de la consigne émise par l'unité de commande et la vitesse d'entraînement en rotation du rotor principal effectivement obtenue. De telles divergences sont susceptibles de résulter de la structure du giravion, tel que par exemple en raison d'une inertie de la turbine libre à réagir à son entraînement par le générateur de gaz, voire par exemple encore en raison de l'inertie propre aux chaînes cinématiques de manoeuvre des pales du ou des rotors.

De telles inerties ont conduit les concepteurs à développer des moyens d'anticipation par l'unité de commande des besoins en puissance que doit fournir le groupe de motorisation pour entraîner le ou les rotors à la vitesse de référence. Le fonctionnement propre du groupe de motorisation est ensuite régi par l'unité de régulation à partir de la consigne qui lui est transmise par l'unité de commande, afin d'obtenir un entraînement effectif en rotation du rotor principal à la vitesse de référence conformément à la prise en compte des commandes de vol préalablement opérées par le pilote du giravion.

Il a par exemple été proposé par le document US20080283671 (SIKORSKY AIRCRAFT CORP.), d'exploiter dans le cadre de commandes de vol électriques les signaux émis par un pilote pour élaborer une consigne de puissance. Plus particulièrement selon les commandes de vol émises par le pilote, l'unité de commande déduit par anticipation une consigne de puissance que le groupe de motorisation doit fournir, et transmet cette consigne de puissance anticipée à l'unité de régulation. Il est mis à profit le temps de réponse du giravion entre l'émission des commandes de vol et la variation effective du pas des pales du rotor principal, pour générer par anticipation ladite consigne de puissance.

Par ailleurs, l'évolution des techniques a conduit les concepteurs de giravion à envisager de modifier la vitesse d'entraînement en rotation du rotor principal par un ordre de commande dépendant d'une variation de valeur de divers paramètres.

Il est notamment connu de faire varier volontairement la valeur de ladite consigne élaborée par l'unité de commande, dans une plage de vitesses tolérées au regard de conditions de vol maintenues sécurisées du giravion. La variation de la valeur de la consigne est par exemple commandée en fonction d'une variation de la vitesse air de progression du giravion pour améliorer ses performances. On pourra à ce propos se référer à la publication « Enhanced energy maneuverability for attack helicopters using continuous variable rotor speed control » (C.G. SCHAEFER Jr ; F.H. LUTZE, Jr) ; 47th forum American Helicopter Society 1991 ; p. 1293-1303.

Il a aussi été proposé de faire varier la vitesse d'entraînement en rotation du rotor principal selon deux vitesses limites prédéfinies d'une plage tolérée de mise en rotation du rotor principal, sous condition d'un vol sécurisé du giravion.

Par exemple selon le document US2007/118254 (BARNES G.W. et al.), il est proposé de faire varier la vitesse de rotation du rotor sélectivement selon une vitesse maximale ou une vitesse minimale en fonction de la valeur de paramètres relatifs au milieu extérieur ambiant dans lequel un giravion évolue. De tels paramètres sont par exemple identifiés à partir de la hauteur-sol du giravion, de l'altitude-pression, de l'altitude-densité ou de la température extérieure.

Par exemple encore, il a été proposé par le document US 6 198 991 (YAMAKAWA et al.), de modifier la vitesse de rotation du rotor principal lorsque le giravion est en phase d'approche d'une zone de posé, en adaptant la trajectoire du giravion pour réduire les nuisances sonores qu'il génère.

Il est cependant constaté que les règles connues d'anticipation des besoins en puissance du groupe de motorisation, sont insatisfaisantes pour de telles modalités de variation commandée de la vitesse d'entraînement en rotation du rotor principal.

Dans ce contexte, la présente invention a pour but de proposer un procédé d'entraînement en rotation d'au moins un rotor de giravion, rotor principal et/ou rotor annexe notamment, mettant en oeuvre une méthode de détermination par anticipation de la puissance à fournir par le groupe de motorisation.

Une telle anticipation de puissance est recherchée pouvant être obtenue pertinente et fiable dans le cadre particulier d'un entraînement du rotor principal à des vitesses de rotation commandées variables selon une variation de valeur d'au moins un paramètre prédéfini. Un tel entraînement du rotor principal à vitesses variables est provoqué spontanément par des moyens de calcul équipant le giravion, unité de commande notamment, potentiellement de manière continue ou par paliers de valeurs prédéfinies.

II à considérer que selon la démarche de la présente invention, l'obtention de ladite anticipation de puissance est plus particulièrement recherchée dans le cadre :
- ) d'une variation commandée de la vitesse d'entraînement en rotation du rotor principal conformément à une plage de vitesses potentiellement importante, telle que de l'ordre comprise entre 90% et 110% d'une vitesse de référence,
- ) de commandes d'une variation de vitesse d'entraînement du rotor principal potentiellement générées à un rythme soutenu, qui plus est en prenant en compte isolément ou en combinaison divers critères générateurs de telles commandes de variation potentiellement en nombre important.
- ) d'une exécution de la variation de vitesse d'entraînement du rotor principal pouvant s'écouler sur des durées différentes selon de diverses dites commandes de variation.

Le procédé de la présente invention est un procédé d'entraînement en rotation d'au moins un rotor de giravion par un groupe de motorisation équipant le giravion.

Le procédé de la présente invention comprend une opération d'identification par une unité de commande d'une vitesse requise d'entraînement en rotation d'au moins un rotor principal à axe vertical du giravion. La vitesse requise est notamment calculée par application d'une première règle de calcul intégrant au moins un premier paramètre de calcul provoquant une variation commandée dans une plage de valeurs prédéfinie de la valeur de la vitesse requise selon une variation de la valeur du premier paramètre de calcul.

Dans ce contexte, la vitesse requise est déterminée par la première règle de calcul dans le cadre d'une variation commandée de la vitesse d'entraînement du rotor principal. L'exécution de la première règle de calcul élabore la valeur de la vitesse requise, ce qui permet son identification.

Dans le cadre des dispositions proposées par la présente invention, il est à considérer que la variation commandée de la vitesse requise résulte potentiellement d'une commande de vol opérée par un pilote, indifféremment pilote automatique ou pilote humain, et/ou résulte potentiellement encore d'une variation spontanée provoquée par une variation de la valeur du premier paramètre de calcul à partir d'informations relatives à l'état de vol ou à des situations de vol du giravion.

Il est subsidiairement à considérer que l'unité de commande est de préférence génératrice d'une consigne de vitesse requise qui est transmise au moins à des moyens d'asservissement de l'entraînement du rotor principal conformément à la vitesse requise, de tels moyens d'asservissement étant potentiellement intégrés au moins en partie à des moyens de régulation du fonctionnement du groupe de motorisation.

Les dits moyens d'asservissement comprennent par exemple un calculateur d'asservissement dédié spécifiquement à la régulation de l'entraînement du rotor principal à la vitesse requise. La régulation de l'entraînement du rotor principal est potentiellement effectuée par régulation du fonctionnement de moyens moteurs équipant le giravion et procurant l'entraînement au moins du rotor principal en rotation, et/ou par la mise en oeuvre de moyens de transmission mécanique interposés sur une chaîne cinématique d'entraînement du rotor principal. Les dits moyens moteurs sont notamment formés du groupe de motorisation incluant un moteur à combustion, turboréacteur notamment, voire encore incluant potentiellement une machine électrique en prise sur la chaîne cinématique d'entraînement du rotor principal. Dans le cadre notamment d'une motorisation hybride du giravion associant un moteur à combustion et une machine électrique réversible, une telle machine électrique procure avantageusement selon des besoins spécifiques préalablement identifiés un apport marginal et ponctuel de puissance mécanique.

Toujours dans le cadre des dispositions proposées par la présente invention, il est encore à considérer que la dite variation commandée est génératrice d'une variation de la vitesse requise indifféremment par paliers de valeur prédéfinis ou par variation progressive et continue de la vitesse requise selon la variation de la valeur du premier paramètre de calcul.

Toujours dans le cadre des dispositions proposées par la présente invention, il est encore à considérer que le premier paramètre de calcul est par exemple un paramètre physicochimique caractéristique de l'air extérieur ambiant du giravion, masse volumique ou température de l'air notamment. Par exemple encore le premier paramètre de calcul est relatif à un changement d'état de vol du giravion, telle qu'une variation de sa vitesse de progression et/ou une variation de sa position suivant l'axe de gravité, variation indifféremment de sa hauteur sol ou de son altitude. Par exemple encore, le premier paramètre de calcul est relatif à une situation de vol spécifique du giravion, tel que selon un territoire survolé, une phase d'approche ou d'éloignement d'une zone de poser, ou encore une mise en situation de combat par exemples. Par exemple encore le premier paramètre de calcul est relatif à la vitesse de déplacement d'une pale du rotor principal, et plus particulièrement la vitesse de déplacement d'au moins une pale avançante du rotor principal considérée à son extrémité libre et rapportée à la vitesse du son local.

Le procédé de la présente invention comprend aussi une opération d'application par une unité de commande, d'une méthode de détermination par calcul d'une consigne de puissance à fournir par le groupe de motorisation. Le calcul de ladite consigne de puissance est notamment fondée au moins sur l'application d'une deuxième règle de calcul intégrant au moins un deuxième paramètre de calcul d'une puissance anticipée que le groupe de motorisation doit fournir en fonction au moins des charges supportées par le rotor principal entraîné à la vitesse requise préalablement identifiée.

Le procédé de la présente invention comprend encore une opération de transmission d'au moins un ordre de commande relatif au moins à ladite consigne de puissance à des moyens de régulation du fonctionnement du groupe de motorisation. Les dits moyens de régulation provoquent la mise en oeuvre du groupe de motorisation pour entraîner ledit au moins un rotor en rotation conformément à un entraînement en rotation du rotor principal selon la consigne de puissance générée par l'unité de commande. Les moyens de régulation comprennent au moins une unité de régulation d'une injection en carburant vers au moins un moteur à combustion du groupe de motorisation, voire encore des moyens de commande de la mise en oeuvre d'une machine électrique dans le cadre d'une motorisation hybride du giravion.

Selon la présente invention, un tel procédé est principalement reconnaissable en ce que la deuxième règle de calcul de ladite consigne de puissance intègre au moins un troisième paramètre de calcul d'un surplus de puissance. Le dit surplus de puissance est relatif à un besoin progressif en puissance à fournir depuis une puissance courante d'entraînement du rotor principal à une vitesse courante de rotation, vers la puissance anticipée d'entraînement du rotor principal à la vitesse requise.

L'anticipation des besoins en puissance à fournir par le groupe de motorisation prend non seulement en compte ladite puissance anticipée, mais aussi le surplus de puissance nécessaire pour entraîner progressivement le ou les rotors depuis la vitesse courante vers la vitesse requise.

Une telle anticipation de besoins progressifs en puissance, et la transmission à l'unité de régulation d'un ordre de commande intégrant non seulement la puissance anticipée mais aussi ledit surplus de puissance fondé sur de tels besoins progressifs en puissance, permet de réduire le temps de réaction entre l'émission de l'ordre de commande et l'entraînement effectif du ou des rotors du giravion conformément à la vitesse requise d'entraînement du rotor principal.

La capacité du giravion à réagir conformément aux commandes de vol opérées par le pilote et/ou à une variation de la valeur d'un ou de plusieurs quelconques dits premiers paramètres déterminant la vitesse requise, est accrue et fiable. Une telle capacité de réaction du giravion est obtenue y compris dans le cadre de commandes de variation de vitesse d'entraînement en rotation du rotor principal qui sont potentiellement effectuées à un rythme soutenu et dans une plage de vitesse de variation potentiellement importante, et quelle que soit la durée nécessaire à l'exécution d'une quelconque variation de vitesse commandée.

Les dispositions de la présente invention permettent notamment de palier de manière fiable et satisfaisante à l'inertie des organes structurels du giravion participant à la mise en oeuvre du ou des rotors. De tels organes structurels participant à la mise en oeuvre du ou des rotors regroupent essentiellement :
- ) les organes de transmission du giravion composant les chaînes cinématiques interposées entre le ou les rotors et le groupe de motorisation. Plus spécifiquement, ces organes de transmission sont ceux interposés entre le ou les rotors et la turbine libre d'au moins un turbomoteur du groupe de motorisation, voire encore comprennent une telle dite turbine libre en raison de son inertie propre à réagir aux sollicitations d'un générateur de gaz équipant le groupe de motorisation.
- ) les organes du giravion composant les chaînes cinématiques de commande interposées entre le pilote et les pales du ou des rotors. De telles chaînes cinématiques de commande sont notamment exploitées pour faire varier collectivement et/ou cycliquement le pas des pales de ce ou de ces rotors.

L'application de la présente invention est particulièrement, mais non exclusivement, adaptée à une détermination par calcul de la vitesse requise selon une variation souhaitée progressive en continu de la vitesse d'entraînement en rotation du rotor principal. La présente invention est aussi applicable dans le cadre d'une variation de la vitesse requise par paliers prédéterminés.

Il est à considérer que la première règle de calcul et la deuxième règle de calcul peuvent être avantageusement intégrées dans un même module de calcul que comprennent des moyens de calcul principaux dédiés à l'identification de la vitesse requise, indifféremment par association ou par intégration entre la première règle de calcul et la deuxième règle de calcul.

Un avantage de la présente invention est la possibilité de prendre en compte le dit surplus de puissance quelles que soient les modalités mises en oeuvre pour identifier la vitesse requise et quelle que soit la plage de temps prévue de séparation d'un entraînement du rotor principal depuis la vitesse courante vers la vitesse requise.

La prise en compte de la dynamique de puissance à fournir par le groupe de motorisation entre la vitesse courante et la vitesse requise d'entraînement du rotor principal, permet aussi d'intégrer dans le troisième paramètre de calcul divers critères de calcul.

Un premier critère de calcul est un critère principal prenant notamment en compte des phases transitoires d'accélération et/ou de décélération du rotor principal. Plus particulièrement, le troisième paramètre de calcul intègre avantageusement un premier critère de calcul relatif à l'accélération ou inversement la décélération du rotor principal entre la vitesse courante et la vitesse requise.

Dans ce contexte, il est notamment pris en compte des phases transitoires d'entraînement du rotor principal à des vitesses de rotation différentes selon des états de vol ou des situations de vol respectives pour lesquelles une vitesse requise est spécifique. De telles phases transitoires sont susceptibles d'être variables en durée, avec pour conséquence de générer des phases propres d'accélération ou de décélération spécifiques. De telles phases propres d'accélération ou de décélération spécifiques sont prises en compte pour anticiper les besoins instantanés en puissance du giravion.

Il est potentiellement considéré diverses variantes prenant en compte un dit premier critère de calcul relatif à une variation progressive de vitesse de rotation du rotor principal. Le premier critère de calcul comprend l'un quelconque au moins des critères de calcul suivants :
- ) une plage de temps séparant l'entraînement du rotor principal entre la vitesse courante et la vitesse requise,
- ) une variation progressive du nombre de tours de rotation du rotor principal entre le nombre de tours de rotation du rotor principal entraîné à ladite vitesse courante et le nombre de tours de rotation du rotor principal entraîné à ladite vitesse requise,
- ) la dérivée temporelle instantanée de la puissance anticipée,
- ) l'un quelconque au moins de premiers paramètres de calcul à partir desquels est définie la vitesse requise.

Le dit surplus de puissance est potentiellement identifiable selon divers facteurs pouvant influer sur la dynamique de puissance à fournir par le groupe de motorisation entre la vitesse courante et la vitesse requise d'entraînement du rotor principal.

Dans ce contexte, des dits critères secondaires peuvent être pris en compte dans l'exécution de la deuxième règle de calcul pour élaborer, par application du troisième paramètre de calcul, l'ordre de commande transmis à l'unité de régulation. De tels critères secondaires sont avantageusement intégrés à la deuxième règle de calcul, et plus particulièrement sont de préférence intégrés au troisième paramètre de calcul afin de permettre une prise en compte des dits critères secondaires non seulement pour déterminer au moins ladite puissance anticipée mais aussi pour calculer ledit surplus de puissance.

Par exemple, il est proposé d'intégrer au troisième paramètre de calcul un deuxième critère de calcul relatif aux modalités de mise en oeuvre d'organes annexes consommateurs de puissance mécanique équipant le giravion, dans une plage de temps séparant l'entraînement du rotor principal depuis la vitesse courante vers la vitesse requise.

Les besoins progressifs en puissance pris en compte pour anticiper les besoins en puissance du giravion à fournir par le groupe de motorisation, sont susceptibles de s'étendre sur une plage de temps potentiellement conséquente. Une telle plage de temps est à considérer au regard d'une durée s'écoulant entre un entraînement du rotor principal à ladite vitesse courante, considérée initiale à un instant donné, et un entraînement du rotor principal à la vitesse requise. La vitesse courante initiale et la vitesse requise d'entraînement du rotor principal sont potentiellement exploitées pour des situations de vol respectives du giravion, situations de vol potentiellement éloignées dans le temps.

Les mises en oeuvre respectives des divers organes consommateurs de puissance mécanique équipant le giravion peuvent varier dans ladite plage de temps. Il est proposé de prendre en compte l'état de fonctionnement de ces divers organes consommateurs de puissance mécanique, pour anticiper les besoins instantanés en puissance du giravion au fur et à mesure du développement de ladite plage de temps séparant le passage de l'entraînement du ou des rotors entre la vitesse courante initiale et la vitesse requise d'entraînement du rotor principal.

La prise en compte traditionnelle d'une variation du pas collectif d'un rotor annexe ou des efforts fournis par un quelconque dispositif anti-couple analogue, est de préférence complétée par une prise en compte dans ladite plage de temps de l'évolution des mises en oeuvre respectives de l'ensemble des organes du giravion consommateurs d'énergie mécanique.

Plus particulièrement, il est à considérer que le deuxième critère de calcul est par exemple un critère de calcul comprenant potentiellement l'un quelconque au moins des critères de calcul suivants :
- ) une variation des efforts développés par un dispositif anti-couple équipant le giravion, telle qu'une variation de pas collectif des pales d'un rotor anti-couple équipant le giravion ou une variation des modalités de mise en oeuvre d'un quelconque dispositif anti-couple, tel qu'à propulsion d'air,
- ) une variation de pas cyclique des pales du rotor principal,
- ) une commande de manoeuvre d'au moins une gouverne mobile équipant le giravion apte à modifier son comportement en vol,
- ) une commande du fonctionnement d'un équipement de servitude du giravion, telle qu'une installation de ventilation, de chauffage et/ou de climatisation,
- ) une commande du fonctionnement d'une machine électrique équipant le giravion, telle qu'un alternateur ou une machine électrique, telle qu'un alternateur ou une machine électrique réversible apte à procurer un apport sélectif de puissance mécanique d'entraînement du ou des rotors équipant le giravion.

Les besoins instantanés en puissance du giravion au fur et à mesure de l'écoulement de ladite plage de temps séparant le passage de l'entraînement du rotor principal entre une vitesse courante initiale et la vitesse requise, sont potentiellement variables selon la situation instantanée de vol du giravion.

Il est en conséquence de préférence proposé de prendre en compte un changement de situation de vol du giravion, notamment au regard d'une variation de l'environnement extérieur du giravion et/ou d'une phase de vol spécifique du giravion. Il est par exemple pris en compte la vitesse de progression du giravion, telle qu'à basses vitesses, à vitesses transitoires ou à vitesse de croisière, et/ou par exemple encore sa position par rapport au sol.

Plus particulièrement et dans le contexte d'une prise en compte de dits critères de calcul secondaires associés au premier critère de calcul, il est par exemple encore proposé d'intégrer au troisième paramètre de calcul un troisième critère de calcul relatif à une situation de vol du giravion. Ce troisième critère de calcul comprend notamment l'un quelconque au moins des critères de calcul suivants :
- ) une variation progressive de la distance de séparation suivant l'axe de gravité entre le giravion et un système référentiel terrestre, telle qu'une variation d'altitude ou hauteur sol du giravion,
- ) une variation des caractéristiques aérodynamiques du giravion. Plus particulièrement, une telle variation des caractéristiques aérodynamiques du giravion est potentiellement prise en compte pendant la plage de temps séparant l'entraînement du rotor principal entre la vitesse courante et la vitesse requise. Une telle modification des caractéristiques aérodynamiques du giravion est potentiellement provoquée par le déploiement ou inversement l'escamotage, voire encore la manoeuvre, d'un organe générant une éventuelle prise au vent spécifique du giravion, tel qu'un train d'atterrissage escamotable ou un phare escamotable.
- ) une variation progressive de l'un quelconque au moins de paramètres physico-chimiques de l'air extérieur ambiant du giravion, de tels paramètres, comme la masse volumique et la température, étant influant sur la portance procurée par le rotor principal pour un pas de pales donné.

Selon un exemple détaillé du procédé de la présente invention, ledit procédé comprend plus particulièrement les étapes suivantes :
- ) évaluer la puissance courante fournie par le groupe de motorisation,
- ) collecter la vitesse requise générée par des moyens principaux de calcul intégrant la première règle de calcul,
- ) déduire la puissance anticipée correspondante à la puissance nécessaire à l'entraînement du rotor principal à la vitesse requise, par exécution de la deuxième règle de calcul appliquant le deuxième paramètre de calcul,
- ) déduire la puissance totale à fournir selon la puissance anticipée préalablement déduite, et selon un calcul du dit surplus de puissance par exécution de la deuxième règle de calcul appliquant le troisième paramètre de calcul,
- ) transmettre à l'unité de régulation un ordre de commande relatif au moins à la puissance totale à fournir préalablement déduite.

Selon un autre exemple détaillé du procédé de la présente invention, ledit procédé comprend plus particulièrement les étapes suivantes dans le cadre d'une motorisation hybride du giravion :
- ) évaluer la puissance courante fournie par le groupe de motorisation,
- ) collecter la vitesse requise générée par des moyens principaux de calcul intégrant la première règle de calcul,
- ) déduire la puissance anticipée correspondante à la puissance nécessaire à l'entraînement du rotor principal à la vitesse requise, par exécution de la deuxième règle de calcul appliquant le deuxième paramètre de calcul,
- ) calculer le dit surplus de puissance par exécution de la deuxième règle de calcul appliquant le troisième paramètre de calcul,
- ) transmettre un premier ordre de commande relatif au moins à ladite puissance anticipée à l'unité de régulation, et transmettre un deuxième ordre de commande relatif au moins au dit surplus de puissance à des moyens de commande de la mise en oeuvre d'une machine électrique du groupe de motorisation en prise sur une chaîne cinématique d'entraînement du rotor principal.

De préférence, l'étape d'évaluation de la puissance courante fournie par le groupe de motorisation comprend indifféremment isolément ou en combinaison :
- ) une opération de collecte d'une information connue relative à ladite puissance courante préalablement calculée par la mise en oeuvre de ladite méthode,
- ) une opération de mesure en temps réel, notamment pour un pas de pales du rotor principal donné, du nombre de tours effectués par le rotor principal à instant donné.

De préférence encore, l'étape de déduction de la puissance anticipée comprend une opération de calcul de la charge subie par le rotor principal entraîné à la vitesse requise, et une opération de calcul de ladite puissance anticipée à partir de la dite charge calculée.

L'étape de calcul du surplus en puissance comprend par exemple une opération de calcul de la dérivée de la différence de tours de rotation du rotor principal entraîné respectivement à la vitesse courante et à la vitesse requise dans une plage de temps donnée (T1,T2).

Il est à considérer que l'exécution de la deuxième règle de calcul est indifféremment opérée par séquences à une fréquence donnée, de préférence aussi brèves que possible, ou en continu selon une variation continue de la valeur du troisième paramètre de calcul.

Il est encore à considérer que la vitesse requise est déterminée par la première règle de calcul indifféremment par détection d'un seuil de valeur atteint d'au moins un dit premier paramètre de calcul de dite vitesse requise ou par détection d'une variation progressive en continu de la valeur d'au moins un dit premier paramètre de calcul.

Des exemples de réalisation de la présente invention vont être décrits en relation avec la figure de la planche annexée, dans laquelle :
- la fig.1 est un schéma illustrant un procédé conforme à la présente invention, pour provoquer un entraînement d'un ou plusieurs rotors d'un giravion à une vitesse commandée de rotation.
- la fig.2 est un schéma illustrant des modalités particulières d'exécution d'une méthode de détermination d'une consigne de puissance, dans le cadre de la mise en oeuvre du procédé représenté sur la fig.1.

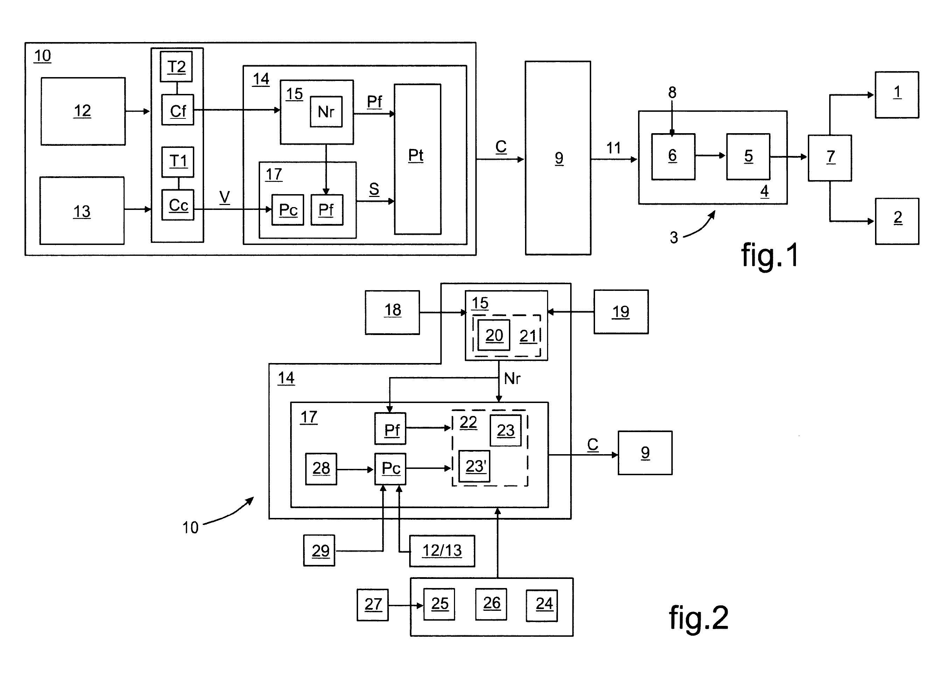

Sur la fig.1, un giravion est équipé d'un ou de plusieurs rotors 1, 2 entraînés en rotation par un groupe de motorisation 3. Le giravion est plus particulièrement équipé d'au moins un rotor principal 1 à axe vertical procurant la sustentation du giravion, et éventuellement d'au moins un rotor annexe 2 à axe sensiblement horizontal.

Le groupe de motorisation 3 comporte au moins un moteur à combustion 4, turboréacteur notamment, comprenant une turbine libre 5 entraînée en rotation par un générateur de gaz 6. Le ou les rotors 1,2 sont entraînés en rotation à partir de la turbine libre 5, par l'intermédiaire d'une boîte de transmission principale 7 de puissance mécanique en prise sur la turbine libre 5. Le générateur de gaz 6 est équipé de moyens d'injection 8 de carburant dont la mise en oeuvre est commandée par une unité de régulation 9, pour entraîner la turbine libre 5 à une vitesse de rotation déterminée par l'unité de régulation 9 conformément à un ordre de commande C transmis depuis une unité de commande 10.

Plus particulièrement, l'unité de commande 10 élabore l'ordre de commande C, qui est transmis à l'unité de régulation 9. L'unité de régulation 9, telle que du type FADEC (d'après l'acronyme anglais Full Authority Digital Engine Control), génère des ordres d'injection 11 pour réguler notamment le débit de carburant admis vers le générateur de gaz 6 à travers un injecteur ou organe analogue de délivrance du carburant. L'unité de commande 10 associe notamment deux modules de commande 12,13, tel que du type respectivement AFCS (d'après l'acronyme anglais Automatic Flight Control System) et du type PFCS (d'après l'acronyme anglais (Primary Flight Control System).

L'ordre de commande C est relatif au moins à une puissance totale à fournir Pt par le groupe de motorisation 3 pour l'entraînement du ou des rotors 1,2, conformément à l'entraînement en rotation du rotor principal 1 à une vitesse requise Nr. La vitesse requise Nr est une vitesse commandée préalablement calculée selon un cas de vol ou une situation de vol du giravion prédéfinis.

Sur l'exemple de réalisation illustré, la vitesse requise Nr est préférentiellement calculée par l'unité de commande 10. Cependant, il est à considérer que le calcul de la vitesse requise Nr est potentiellement réalisé par une unité de calcul spécifique en relation avec l'unité de commande 10 génératrice de la valeur de la puissance à fournir Pt.

La vitesse requise Nr est variable dans une plage prédéfinie de vitesses d'entraînement en rotation du rotor principal 1. A titre indicatif, une telle variation est comprise dans une plage de vitesses de l'ordre comprise entre 90% et 110% d'une vitesse nominale d'entraînement en rotation du rotor principal 1.

Les modules de commande 12,13 permettent d'estimer un cas de vol du giravion. L'unité de commande 10 comprend un module de calcul 14 comportant des moyens principaux de calcul 15 dédiés à la détermination de la vitesse requise Nr à partir d'un cas de vol et/ou d'une situation de vol préalablement estimés. La variation de la valeur calculée de la vitesse requise Nr est potentiellement une variation de valeur progressive en continu ou une variation de valeurs par paliers selon les valeurs prédéfinies.

Il est considéré une distinction entre une puissance courante Pc et une puissance anticipée Pf.

La puissance courante Pc correspond aux besoins en puissance du giravion à un instant T1 donné. La puissance courante Pc est notamment calculée selon la charge appliquée au(x) rotor(s) à une vitesse courante V d'entraînement en rotation du rotor principal 1, et/ou le cas échéant selon les modalités courantes de fonctionnement d'organes consommateurs d'énergie mécanique équipant le giravion. La puissance courante Pc est définie à un instant donné T1 pour une dite vitesse courante V selon un cas de vol courant Cc.

La notion de « courant » est à considérer au regard d'un état de vol et/ou d'une situation de vol immédiats du giravion. La vitesse courante V est par exemple issue d'une mesure et/ou d'un calcul effectués par une instrumentation de bord du giravion. La vitesse courante V est par exemple encore déterminée selon une vitesse requise Nr préalablement générée.

La puissance anticipée Pf correspond à la puissance nécessaire au giravion conformément à un cas de vol anticipé Cf déterminant par calcul la vitesse requise Nr à un instant T2 variable selon le cas de vol anticipé Cf. La puissance anticipée Pf est notamment calculée essentiellement pour l'entraînement du ou des rotors 1,2 à un instant T2, voire encore le cas échéant en prenant en compte la mise en oeuvre de l'un au moins des dits organes consommateurs d'énergie mécanique équipant le giravion.

L'unité de commande 10 comporte des moyens complémentaires de calcul 17 d'un surplus de puissance S que le groupe de motorisation 3 doit fournir progressivement entre l'instant T1 et l'instant T2 pour l'obtention d'un entraînement du rotor principal 1 à la vitesse requise Nr. Un tel surplus de puissance S prend notamment en compte la variation entre la vitesse courante V et la vitesse requise Nr, indifféremment en accélération ou inversement en décélération.

A partir du calcul de la puissance anticipée Pf et du surplus de puissance S, l'unité de commande 10 détermine par sommation la Puissance totale Pt que le groupe de motorisation 3 doit fournir pour répondre aux besoins du giravion. L'ordre de commande C transmis à l'unité de régulation 9 est déterminé par l'unité de commande 10 à partir de cette puissance totale Pt.

Il en ressort que la détermination de l'ordre de commande C par l'unité de commande 10 prend en compte non seulement la puissance anticipée Pf que le groupe de motorisation 3 doit fournir pour l'entraînement en rotation du ou des rotors 1,2 conformément à une vitesse requise Nr d'entraînement en rotation du rotor principal 1, mais aussi le surplus de puissance S que le groupe de motorisation 3 doit fournir progressivement entre la puissance courante Pc à l'instant T1 et la puissance anticipée Pf à l'instant T2.

Plus particulièrement sur la fig.2, un module de calcul 14 que comprend une unité de commande 10, permet de déterminer un dit ordre de commande C à transmettre à une unité de régulation 9, conformément aux dispositions précédemment mentionnées en relation avec la fig.1.

Des moyens principaux de calcul 15 sont dédiés à l'identification de ladite vitesse requise Nr, et sont à cet effet en relation avec divers moyens générateurs d'informations 18,19. De telles informations sont par exemple, isolément ou en combinaison, des informations relatives :
- ) à une variation, soit par palier soit et de préférence progressivement en continu, d'au moins un paramètre physicochimique 18 de l'air ambiant extérieur au giravion, masse volumique de l'air notamment, et/ou
- ) à des commandes de vol 19 opérées par un pilote du giravion pour faire varier l'incidence des pales du ou des rotors 1,2, indifféremment par un pilote humain ou par un pilote automatique.

La vitesse requise Nr est identifiée par les moyens principaux de calcul 15, par exécution d'une première règle de calcul 21 intégrant un premier paramètre de calcul 20 prenant en compte une variation de valeur des informations issues des moyens générateurs d'informations 18,19.

Des moyens complémentaires de calcul 17 sont indifféremment intégrés ou associés aux moyens principaux de calcul 15, et élaborent l'ordre de commande C transmis à l'unité de régulation 9. La première règle de calcul 20 et la deuxième règle de calcul 21 sont potentiellement intégrées dans une même règle de calcul 20,22, ou sont potentiellement encore des règles de calcul 20,22 distinctes exécutées successivement.

A partir de la vitesse requise Nr, une deuxième règle de calcul 22 intégrée à des moyens complémentaires de calcul 17 est exécutée. La deuxième règle de calcul 22 intègre un deuxième paramètre de calcul 23, notamment relatif au moins à la vitesse requise Nr, pour déduire la puissance anticipée Pf selon au moins la valeur de la vitesse requise Nr.

La deuxième règle de calcul intègre en outre un troisième paramètre de calcul 23', à partir duquel est évalué le dit surplus de puissance S. Le troisième paramètre de calcul 23' prend potentiellement en compte non seulement un première critère de calcul relatif à ladite variation entre la vitesse courante V et la vitesse requise Nr, mais aussi isolément ou en combinaison divers critères secondaires de calcul 24, 25, 26 définissant un cas de vol et/ou une situation de vol du giravion. Par exemple, un deuxième critère de calcul 25 est relatif aux modalités de mise en oeuvre de divers organes et/ou équipements 27 du giravion consommateurs de puissance mécanique. Par exemple encore, un troisième critère de calcul 26 est relatif à l'état de vol du giravion. L'intégration dans le troisième paramètre de calcul 23' des dits critères secondaires de calcul 24, 25, 26 permet leur prise en compte non seulement pour déterminer au moins la puissance anticipée Pf, mais aussi éventuellement le dit surplus de puissance S que le groupe de motorisation 3 doit fournir.

La puissance courante Pc est par exemple identifiée par des moyens de mémoire 28 que comprennent les moyens complémentaires de calcul 17, et/ou par des capteurs 29 évaluant la puissance courante Pc selon le cas de vol courant du giravion, voire encore est identifiée par les dits modules de commande 12,13.

## Revendications

1. Procédé d'entraînement en rotation d'au moins un rotor de giravion (1,2) par un groupe de motorisation (3) équipant le giravion, ledit procédé comprenant les opérations suivantes :
- ) identifier par une unité de commande (10) une vitesse requise (Nr) d'entraînement en rotation d'au moins un rotor principal (1) à axe vertical du giravion, la vitesse requise (Nr) étant calculée par application d'une première règle de calcul (21) intégrant au moins un premier paramètre de calcul (20) provoquant une variation commandée dans une plage de valeurs prédéfinie de la valeur de la vitesse requise (Nr) selon une variation de la valeur du premier paramètre de calcul (20),
- ) appliquer par l'unité de commande (10) une méthode de détermination par calcul d'une consigne de puissance à fournir par le groupe de motorisation (3), le calcul de ladite consigne de puissance étant fondé au moins sur l'application d'une deuxième règle de calcul (22) intégrant au moins un deuxième paramètre de calcul (23) d'une puissance anticipée (Pf) que le groupe de motorisation (3) doit fournir en fonction au moins des charges supportées par le rotor principal (1) entraîné à la vitesse requise (Nr) préalablement identifiée,
- ) transmettre au moins un ordre de commande (C) relatif au moins à ladite consigne de puissance à des moyens de régulation du fonctionnement du groupe de motorisation (3), les dits moyens de régulation provoquant la mise en oeuvre du groupe de motorisation (3) pour entraîner ledit au moins un rotor (1,2) en rotation conformément à un entraînement en rotation du rotor principal (1) à la vitesse requise (Nr), les dits moyens de régulation comprenant au moins une unité de régulation (9) d'une injection en carburant vers au moins un moteur à combustion (4) du groupe de motorisation (3), **caractérisé en ce que** la deuxième règle de calcul (22) de ladite consigne de puissance (Pt) intègre au moins un troisième paramètre de calcul (23') d'un surplus de puissance (S), le dit surplus de puissance (S) étant relatif à un besoin progressif en puissance à fournir depuis une puissance courante (Pc) d'entraînement du rotor principal (1) à une vitesse courante (V) de rotation, vers la puissance anticipée (Pf) d'entraînement du rotor principal (1) à la vitesse requise (Nr).

2. Procédé selon la revendication 1,
**caractérisé en ce que** le troisième paramètre de calcul (23') intègre un premier critère de calcul (24) relatif à l'accélération ou inversement la décélération du rotor principal (1) entre la vitesse courante (V) et la vitesse requise (**Nr**).

3. Procédé selon la revendication 2,
**caractérisé en ce que** le premier critère de calcul (24) est un critère de calcul relatif à une variation progressive de vitesse de rotation du rotor principal (1), le premier critère de calcul (24) comprenant l'un quelconque au moins des critères de calcul suivants :
- ) une plage de temps (T1,T2) séparant l'entraînement du rotor principal (1) entre la vitesse courante (V) et la vitesse requise (Nr),
- ) une variation progressive du nombre de tours de rotation du rotor principal (1) entre le nombre de tours de rotation du rotor principal (1) entraîné à ladite vitesse courante (V) et le nombre de tours de rotation du rotor principal (1) entraîné à ladite vitesse requise (Nr),
- ) la dérivée temporelle instantanée de la puissance anticipée (Pf),
- ) l'un quelconque au moins de premiers paramètres de calcul (20) à partir desquels est définie la vitesse requise (**Nr**).

4. Procédé selon l'une quelconque des revendications 1 à 3, **caractérisé en ce que** le troisième paramètre de calcul (23') intègre un deuxième critère de calcul (25) relatif aux modalités de mise en oeuvre d'organes annexes consommateurs de puissance mécanique (27) équipant le giravion, dans une plage de temps (T1,T2) séparant l'entraînement du rotor principal (1) depuis la vitesse courante (V) vers la vitesse requise (**Nr**).

5. Procédé selon la revendication 4,
**caractérisé en ce que** le deuxième critère de calcul (25) est un critère de calcul comprenant l'un quelconque au moins des critères de calcul suivants :
- ) une variation des efforts développés par un dispositif anti-couple équipant le giravion,
- ) une variation de pas cyclique des pales du rotor principal (1),
- ) une commande de manoeuvre d'au moins une gouverne mobile équipant le giravion apte à modifier son comportement en vol,
- ) une commande du fonctionnement d'un équipement de servitude (27) du giravion,
- ) une commande du fonctionnement d'une machine électrique.

6. Procédé selon l'une quelconque des revendications 1 à 5,
**caractérisé en ce que** le troisième paramètre de calcul (23') intègre un troisième critère de calcul (26) relatif à une situation de vol du giravion et comprenant l'un quelconque au moins des critères de calcul suivants :
- ) une variation progressive de la distance de séparation suivant l'axe de gravité entre le giravion et un système référentiel terrestre,
- ) une variation des caractéristiques aérodynamiques du giravion,
- ) une variation progressive de l'un quelconque au moins de paramètres physico-chimiques de l'air extérieur ambiant du giravion.

7. Procédé selon l'une quelconque des revendications 1 à 6, **caractérisé en ce que** le procédé comprend les étapes suivantes :
- ) évaluer la puissance courante (Pc) fournie par le groupe de motorisation (3),
- ) collecter la vitesse requise (Nr) générée par des moyens principaux de calcul (15) intégrant la première règle de calcul (21),
- ) déduire la puissance anticipée (Pf) correspondante à la puissance nécessaire à l'entraînement du rotor principal (1) à la vitesse requise (Nr), par exécution de la deuxième règle de calcul (22) appliquant le deuxième paramètre de calcul (23),
- ) déduire la puissance totale à fournir (Pt) selon la puissance anticipée préalablement déduite (Pf), et selon un calcul du dit surplus de puissance (S) par exécution de la deuxième règle de calcul (22) appliquant le troisième paramètre de calcul (23'),
- ) transmettre à l'unité de régulation (9) un ordre de commande (C) relatif au moins à la puissance totale à fournir (Pt) préalablement déduite.

8. Procédé selon l'une quelconque des revendications 1 à 6, **caractérisé en ce que** le procédé comprend les étapes suivantes :
- ) évaluer la puissance courante (Pc) fournie par le groupe de motorisation (3),
- ) collecter la vitesse requise (Nr) générée par des moyens principaux de calcul (15) intégrant la première règle de calcul (21),
- ) déduire la puissance anticipée (Pf) correspondante à la puissance nécessaire à l'entraînement du rotor principal (1) à la vitesse requise (Nr), par exécution de la deuxième règle de calcul (22) appliquant le deuxième paramètre de calcul (23),
- ) calculer le dit surplus de puissance (S) par exécution de la deuxième règle de calcul (22) appliquant le troisième paramètre de calcul (23'),
- ) transmettre un premier ordre de commande (C) relatif au moins à ladite puissance anticipée (Pf) à l'unité de régulation (9), et transmettre un deuxième ordre de commande (C) relatif au moins au dit surplus de puissance (S) à des moyens de commande de la mise en oeuvre d'une machine électrique du groupe de motorisation en prise sur une chaîne cinématique d'entraînement du rotor principal (1).

9. Procédé selon l'une quelconque des revendications 7 et 8,
**caractérisé en ce que** l'étape d'évaluation de la puissance courante (Pc) fournie par le groupe de motorisation (3) comprend indifféremment isolément ou en combinaison :
- ) une opération de collecte d'une information connue relative à ladite puissance courante (Pc) préalablement calculée par la mise en oeuvre de ladite méthode,
- ) une opération de mesure en temps réel du nombre de tours effectués par le rotor principal (1) à instant donné.

10. Procédé selon l'une quelconque des revendications 7 à 9,
**caractérisé en ce que** l'étape de déduction de la puissance anticipée (Pf) comprend une opération de calcul de la charge subie par le rotor principal (1) entraîné à la vitesse requise (Nr), et une opération de calcul de ladite puissance anticipée (Pf) à partir de la dite charge calculée.

11. Procédé selon l'une quelconque des revendications 7 à 10,
**caractérisé en ce que** l'étape de calcul du surplus de puissance (S) comprend une opération de calcul de la dérivée de la différence de tours de rotation du rotor principal (1) entraîné respectivement à la vitesse courante (V) et à la vitesse requise (Nr) dans une plage de temps donnée.

12. Procédé selon l'une quelconque des revendications 1 à 11,
**caractérisé en ce que** l'exécution de la deuxième règle de calcul (21,22) est indifféremment opérée par séquences à une fréquence donnée ou en continu selon une variation continue de la valeur du troisième paramètre de calcul (23').

13. Procédé selon l'une quelconque des revendications 1 à 12,
**caractérisé en ce que** la vitesse requise (Nr) est déterminée par la première règle de calcul (21) indifféremment par détection d'un seuil de valeur atteint d'au moins un dit premier paramètre de calcul (20) de la vitesse requise (Nr) ou par détection d'une variation progressive en continu de la valeur d'au moins un dit premier paramètre de calcul (20).

14. Procédé selon l'une quelconque des revendications 1 à 13,
**caractérisé en ce que** l'unité de commande (10) est génératrice d'une consigne de vitesse requise (Nr) transmise au moins à des moyens d'asservissement de l'entraînement du rotor principal conformément à la vitesse requise (Nr).

## Patentansprüche

1. Verfahren zum Drehantrieb mindestens eines Rotors (1,2) eines Drehflügelflugzeugs durch eine Antriebseinheit (3), mit der das Drehflügelflugzeug ausgerüstet ist, mit folgenden Schritten:
- ) Identifizieren einer erforderlichen Drehantriebsgeschwindigkeit (Nr) mindestens eines Hauptrotors (1) des Drehflügelflugzeugs mit vertikaler Achse durch eine Steuereinheit (10), wobei die erforderliche Geschwindigkeit (Nr) berechnet wird durch die Anwendung einer ersten Rechenregel (21), die mindestens einen ersten Berechnungsparameter (20) umfasst, der eine gesteuerte Veränderung in einem vorbestimmten Wertebereich des Wertes der erforderlichen Geschwindigkeit (Nr) gemäß einer Änderung des Wertes des ersten Berechnungsparameters (20) bewirkt,
- ) Anarenden eines Verfahrens durch die Steuereinheit (10) zur Bestimmung durch Berechnung eines Sollwertes der von der Antriebseinheit (3) zu liefernden Leistung, wobei die Berechnung des Sollwertes der Leistung mindestens auf der Anwendung einer zweiten Rechenregel (22) basiert, die mindestens einen zweiten Parameter (23) zur Berechnung einer vorweggenommenen Leistung (Pf) umfasst, die die Antriebseinheit (3) zu liefern hat in Abhängigkeit von mindestens von dem Hauptrotor (1) getragenen Lasten, wobei der Hauptrotor (1) mit der zuvor identifizierten erforderlichen Geschwindigkeit (Nr) angetrieben wird,
- ) Übertragen mindestens eines Steuerbefehls (C) mindestens bezüglich des Sollwertes der Leistung an Regelungsmittel für den Betrieb der Antriebseinheit (3), wobei die Regelungsmittel den Betrieb der Antriebseinheit (3) bewirken, um den mindestens einen Rotor (1, 2) zu einer Drehbewegung anzutreiben in Übereinstimmung mit einem Drehantrieb des Hauptrotors (1) mit der erforderlichen Geschwindigkeit (Nr), wobei die Regelungsmittel mindestens eine Einheit (9) zum Regeln einer Kraftstoffeinspritzung in mindestens einen Verbrennungsmotor (4) der Antriebseinheit (3) aufweisen,
dadurch gekennzeichet, dass die zweite Rechenregel (22) des Sollwertes der Leistung (Pt) mindestens einen dritten Berechnungsparameter (23') eines Leistungsüberschusses (S) umfasst, wobei der Leistungsüberschuss (S) sich auf einen zunehmenden Bedarf an zu liefernder Leistung ausgehend von einer aktuellen Leistung (Pc) zum Antrieb des Hauptrotors (1) bei einer aktuellen Drehgeschwindigkeit (V) hin zu der vorweggenommenen Leistung (Pf) zum Antrieb des Hauptrotors (1) mit der erforderlichen Geschwindigkeit (Nr) bezieht.

2. Verfahren nach Anspruch 1,
**dadurch gekennzeichnet, dass** der dritte Berechnungsparameter (23') ein erstes Berechnungskriterium (24) bezüglich der Beschleunigung oder umgekehrt der Verzögerung des Hauptrotors (1) zwischen der aktuellen Geschwindigkeit (V) und der erforderlichen Geschwindigkeit (Nr) umfasst.

3. Verfahren nach Anspruch 2,
dadurch gekennzeichet, dass das erste Berechnungskriterium (24) ein Berechnungskriterium bezüglich einer fortschreitenden Veränderung der Drehgeschwindigkeit des Hauptrotors (1) ist, wobei das erste Berechnungskriterium (24) mindestens eines der folgenden Berechnungskriterien umfasst:
- ) einen Zeitraum (T1, T2), der den Antrieb des Hauptrotors (1) zwischen der aktuellen Geschwindigkeit (V) und der erforderlichen Geschwindigkeit (Nr) trennt,
- ) eine fortschreitende Veränderung der Drehzahl des Hauptrotors (1) zwischen der Drehzahl des Hauptrotors (1), der mit der aktuellen Geschwindigkeit (V) angetrieben wird, und der Drehzahl des Hauptrotors (1), der mit der erforderlichen Geschwindigkeit (Nr) angetrieben wird,
- ) die momentane zeitliche Ableitung der vorweggenommenen Leistung (Pf),
- ) mindestens einen beliebigen ersten Berechnungsparameter (20), vom dem ausgehend die erforderliche Geschwindigkeit (Nr) definiert ist.

4. Verfahren nach einem der Ansprüche 1 bis 3,
**dadurch gekennzeichnet, dass** der dritte Berechnungsparameter (23') ein zweites Berechnungskriterium (25) bezüglich der Betriebsmodalitäten von Nebenaggregaten umfasst, die mechanische Leistung (27) verbrauchen und mit denen das Drehflügelflugzeug ausgerüstet ist, in einer Zeitspanne (T1, T2) zwischen dem Antrieb des Hauptrotors (1) ausgehend von der aktuellen Geschwindigkeit (V) bis zur erforderlichen Geschwindigkeit (Nr).

5. Verfahren nach Anspruch 4,
**dadurch gekennzeichnet, dass** das zweite Berechnungskriterium (25) ein Berechnungskriterium ist, welches mindestens ein beliebiges der folgenden Berechnungskriterien aufweist:
- ) eine Veränderung von Kräften, die durch die Gegendrehmomentvorrichtung erzeugt werden, welche das Drehflügelflugzeug aufweist,
- ) eine Veränderung der zyklischen Verstellung der Rotorblätter des Hauptrotors (1),
- ) eine Manövriersteuerung mindestens eines beweglichen Steuerruders, mit der das Drehflügelflugzeug ausgerüstet ist und dessen Flugverhalten sie ändern kann,
- ) eine Steuerung des Betriebs einer Hilfsausrüstung (27) des Drehflügelflugzeugs,
- ) eine Steuerung des Betriebs einer elektrischen Maschine.

6. Verfahren nach einem der Ansprüche 1 bis 5,
**dadurch gekennzeichnet, dass** der dritte Berechnungsparameter (23') ein drittes Berechnungskriterium (26) bezüglich einer Flugsituation des Drehflügelflugzeugs umfasst und mindestens ein beliebiges der folgenden Berechnungskriterien aufweist:
- ) eine fortschreitende Veränderung des Trennungsabstands entlang der Gravitationsachse zwischen dem Drehflügelflugzeug und einem Bodenbezugssystem,
- ) eine Veränderung der aerodynamischen Eigenschaften des Drehflügelflugzeugs,
- ) eine fortschreitende Veränderung mindestens eines beliebigen chemisch-physikalischen Parameters der Außenumgebungsluft des Drehflügelflugzeugs.

7. Verfahren nach einem der Ansprüche 1 bis 6,
**dadurch gekennzeichnet, dass** das Verfahren folgende Schritte aufweist:
- ) Berechnen der aktuellen Leistung (Pc), die von der Antriebseinheit (3) geliefert wird,
- ) Sammeln der erforderlichen Geschwindigkeit (Nr), die von den Hauptberechnungsmitteln (15), die die erste Rechenregel (21) umfassen, erzeugt wird,
- ) Ableiten der vorweggenommenen Leistung (Pf), die der Leistung entspricht, die zum Antrieb des Hauptrotors (1) mit der erforderlichen Geschwindigkeit (Nr) notwendig ist, durch Ausführen der zweiten Rechenregel (22), die den zweiten Berechnungsparameter (23) anwendet,
- ) Ableiten der zu liefernden Gesamtleistung (Pt) aus der vorher abgeleiteten vorweggenommenen Leistung (Pf) und aus der Berechnung des Leistungsüberschusses (S) durch Ausführung der zweiten Rechenregel (22), die den dritten Berechnungsparameter (23') anwendet,
- ) Übertragen eines Steuerbefehls (C) bezüglich mindestens der zuvor abgeleiteten zu liefernden Gesamtleistung (Pt) an die Regelungseinheit (9).

8. Verfahren nach einem der Ansprüche 1 bis 6,
**dadurch gekennzeichnet, dass** das Verfahren folgende Schritte aufweis:
- ) Berechnen der aktuellen Leistung (Pc), die von der Antriebseinheit (3) geliefert wird,
- ) Sammeln der erforderlichen Geschwindigkeit (Nr), die von den Hauptberechnungsmitteln (15) erzeugt wird, die die erste Rechenregel (21) umfassen,
- ) Ableiten der vorweggenommenen Leistung (Pf), die der Leistung entspricht, die für den Antrieb des Hauptrotors (1) mit der erforderlichen Geschwindigkeit (Nr) notwendig ist, durch Ausführen der zweiten Rechenregel (22), die den zweiten Berechnungsparameter (23) anwendet,
- ) Berechnen des Leistungsüberschusses (S) durch Ausführen der zweiten Rechenregel (22), die den dritten Berechnungsparameter (23') anwendet,
- ) Übertragen eines ersten Steuerbefehls (C) bezüglich mindestens der vorweggenommenen Leistung (Pf) an die Regelungseinheit (9) und Übertragen eines zweiten Steuerbefehls (C) bezüglich mindestens des Leistungsüberschusses (S) an Mittel zur Steuerung des Betriebs einer elektrischen Maschine der Antriebseinheit, die in Eingriff mit dem Antriebsstrang des Hauptrotors (1) steht.

9. Verfahren nach einem der Ansprüche 7 und 8,
**dadurch gekennzeichnet, dass** der Schritt der Berechnung der aktuellen Leistung (Pc), die von der Antriebseinheit (3) geliefert wird, gleichgültig, ob einzeln oder in Kombination, aufweist:
- ) einen Arbeitsgang des Sammelns einer bekannten Information bezüglich der aktuellen Leistung (Pc), die vorher durch die Ausführung des Verfahrens berechnet wurde,
- ) einen Arbeitsgang des Messens der Drehzahl des Hauptrotors (1) zu einem gegebenen Zeitpunkt in Echtzeit.

10. Verfahren nach einem der Ansprüche 7 bis 9,
**dadurch gekennzeichnet, dass** der Schritt der Ableitung der vorweggenommenen Leistung (Pf) einen Arbeitsgang der Berechnung der Last umfasst, mit der der Hauptrotor (1), der mit der erforderlichen Geschwindigkeit (Nr) angetrieben wird, beaufschlagt wird, und einen Arbeitsgang der Berechnung der vorweggenommenen Leistung (Pf) ausgehend von der berechneten Last.

11. Verfahren nach einem der Ansprüche 7 bis 10,
**dadurch gekennzeichnet, dass** der Schritt der Berechnung des Leistungsüberschusses (S) einen Arbeitsgang der Berechnung der Ableitung der Differenz der Drehzahl des Hauptrotors (1), der mit der aktuellen Geschwindigkeit (V) bzw. der erforderlichen Geschwindigkeit (Nr) in einem gegebenen Zeitabschnitt angetrieben wird, aufweist.

12. Verfahren nach einem der Ansprüche 1 bis 11,
**dadurch gekennzeichnet, dass** die Ausführung der zweiten Rechenregel (21, 22) unterschiedslos durch Sequenzen mit einer gegebenen Frequenz oder in Dauerbetrieb gemäß einer kontinuierlichen Veränderung des Wertes des dritten Berechnungsparameters (23') erfolgt.

13. Verfahren nach einem der Ansprüche 1 bis 12,
**dadurch gekennzeichnet, dass** die erforderliche Geschwindigkeit (Nr) durch die erste Rechenregel (21) bestimmt wird, unterschiedslos durch Erfassen eines erreichten Schwellenwerts mindestens eines ersten Berechnungsgaranaeters (20) der erforderlichen Geschwindigkeit (Nr) oder durch Erfassen einer stetig ansteigenden Veränderung des Wertes mindestens eines ersten Berechnungsparameters (20).

14. Verfahren nach einem der Ansprüche 1 bis 13,
**dadurch gekennzeichnet, dass** die Steuereinheit (10) einen Sollwert der erforderlichen Geschwindigkeit (Nr) erzeugt, der mindestens an Antriebssteuermittel des Hauptrotors in Übereinstimmung mit der erforderlichen Geschwindigkeit (Nr) übertragen wird.

## Claims

1. Method of driving in rotation at least one rotorcraft rotor (1,2) by a power plant (3) with which the rotorcraft is equipped, said method comprising the following operations:
- ) identifying by a control unit (10) a required speed (Nr) for driving in rotation at least one vertical-axis main rotor (1) of the rotorcraft, the required speed (Nr) being calculated by applying a first calculation rule (21) incorporating at least one first calculation parameter (20) giving rise to a controlled variation, in a predefined range of values, of the value of the required speed (Nr) depending on a variation in the value of the first calculation parameter (20),
- ) applying by the control unit (10) a method of determining by calculation a power setpoint to be delivered by the power plant (3), the calculation of said power setpoint being based at least on applying a second calculation rule (22) incorporating at least one second calculation parameter (23) for calculating anticipated power (Pf) that the power plant (3) must deliver as a function at least of loads supported by the main rotor (1) driven at the previously-identified required speed (Nr),
- ) transmitting at least one control order (C) relating at least to said power setpoint to regulating means for regulating the operation of the power plant (3), said regulating means causing the power plant (3) to be operated to drive said at least one rotor (1,2) in rotation in accordance with a driving of the main rotor (1) in rotation at the required speed (Nr), said regulating means comprising at least one regulating unit (9) for regulating an injection of fuel to at least one combustion engine (4) of the power plant (3), **characterised in that** the second calculation rule (22) for calculating said power setpoint (Pt) incorporates at least one third calculation parameter (23') for calculating a power surplus (S), said power surplus (S) relating to a progressive power need to be delivered from a current power (Pc) for driving the main rotor (1) at a current speed (V) of rotation to the anticipated power (Pf) for driving the main rotor (1) at the required speed (Nr).

2. Method according to claim 1,
**characterised in that** the third calculation parameter (23') incorporates a first calculation criterion (24) relating to the acceleration or conversely to the deceleration of the main rotor (1) between the current speed (V) and the required speed (Nr).

3. Method according to claim 2,
**characterised in that** the first calculation criterion (24) is a calculation criterion relating to a progressive variation in the speed of rotation of the main rotor (1), the first calculation criterion (24) comprising any one at least of the following calculation criteria:
- ) a time period (T1, T2) separating the driving of the main rotor (1) between the current speed (V) and the required speed (Nr),
- ) a progressive variation in the number of revolutions of the main rotor (1) between the number of revolutions of the main rotor (1) driven at said current speed (V) and the number of revolutions of the main rotor (1) driven at said required speed (Nr),
- ) the instantaneous time derivative of the anticipated power (Pf),
- ) any one at least of first calculation parameters (20) from which the required speed (Nr) is defined.

4. Method according to any one of claims 1 to 3,
**characterised in that** the third calculation parameter (23') incorporates a second calculation criterion (25') relating to modes of using mechanical-power-consuming auxiliary members (27), with which the rotorcraft is equipped, over a time period (T1, T2) separating the driving of the main rotor (1) from the current speed (V) to the required speed (Nr).

5. Method according to claim 4,
**characterised in that** the second calculation criterion (25) is a calculation criterion comprising any one at least of the following calculation criteria:
- ) a variation in the forces developed by an anti-torque device with which the rotorcraft is equipped,
- ) a variation in cyclic pitch of the blades of the main rotor (1),
- ) a control of the manoeuvre of at least one movable control surface with which the rotorcraft is equipped, suitable for modifying its flight behaviour,
- ) a control of the operation of a piece of ancillary equipment (27) of the rotorcraft,
- ) a control of the operation of an electrical machine.

6. Method according to any one of claims 1 to 5,
**characterised in that** the third calculation parameter (23') incorporates a third calculation criterion (26) relating to a flight situation of the rotorcraft and comprising any one at least of the following calculation criteria:
- ) a progressive variation in the distance of separation along the gravity axis between the rotorcraft and a terrestrial reference system,
- ) a variation in the aerodynamic characteristics of the rotorcraft,
- ) a progressive variation in any one at least of physicochemical parameters of the ambient air outside the rotorcraft.

7. Method according to any one of claims 1 to 6,
**characterised in that** the method comprises the following steps:
- ) evaluating the current power (Pc) delivered by the power plant (3),
- ) collecting the required speed (Nr) generated by main calculation means (15) incorporating the first calculation rule (21),
- ) deducing the anticipated power (Pf) corresponding to the power needed for driving the main rotor (1) at the required speed (Nr) by executing the second calculation rule (22) applying the second calculation parameter (23),
- ) deducing the total power to be delivered (Pt) depending on the previously deduced anticipated power (Pf) and depending on a calculation of said power surplus (S) by executing the second calculation rule (22) applying the third calculation parameter (23'),
- ) transmitting to the regulating unit (9) a control order (C) relating at least to the previously-deduced total power to be delivered (Pt).

8. Method according to any one of claims 1 to 6,
**characterised in that** the method comprises the following steps:
- ) evaluating the current power (Pc) delivered by the power plant (3),
- ) collecting the required speed (Nr) generated by main calculation means (15) incorporating the first calculation rule (21),
- ) deducing the anticipated power (Pf) corresponding to the power needed for driving the main rotor (1) at the required speed (Nr) by executing the second calculation rule (22) applying the second calculation parameter (23),
- ) calculating said power surplus (S) by executing the second calculation rule (22) applying the third calculation parameter (23'),
- ) transmitting a first calculation order (C) relating at least to said anticipated power (Pf) to the regulating unit (9), and transmitting a second control order (C) relating at least to said power surplus (S) to control means for operating an electrical machine of the power plant engaged in a drivetrain for driving the main rotor (1).

9. Method according to any one of claims 7 and 8,
**characterised in that** the step of evaluating the current power (Pc) delivered by the power plant (3) comprises equally well in isolation or in combination:
- ) an operation of collecting known information relating to said current power (Pc) previously calculated by implementing said method,
- ) an operation of measuring in real time the number of revolutions performed by the main rotor (1) at a given instant.

10. Method according to any one of claims 7 to 9,
**characterised in that** the step of deducing the anticipated power (Pf) comprises an operation of calculating the load to which the main rotor (1) driven at the required speed (Nr) is subjected, and an operation of calculating said anticipated power (Pf) on the basis of said calculated load.

11. Method according to any one of claims 7 to 10,
**characterised in that** the step of calculating the power surplus (S) comprises an operation of calculating the derivative of the difference of the revolutions of the main rotor (1) driven respectively at the current speed (V) and at the required speed (Nr) over a given time period.

12. Method according to any one of claims 1 to 11,
**characterised in that** the second calculation rule (21,22) is executed equally well by sequences at a given frequency or continuously depending on continuous variation in the value of the third calculation parameter (23').

13. Method according to any one of claims 1 to 12,
**characterised in that** the required speed (Nr) is determined by the first calculation rule (21) equally well by detecting a value threshold reached by at least one said first calculation parameter (20) for the required speed (Nr), or by detecting a continuous progressive variation in the value of at least one said first calculation parameter (20).

14. Method according to any one of claims 1 to 13,
**characterised in that** the control unit (10) generates a required speed (Nr) setpoint transmitted at least to servo-control means for servo-controlling the drive of the main rotor in accordance with the required speed (Nr).
